# DEMANDE DE BREVET EUROPEEN

(11) **EP 3 002 060 A1**
(43) Date de publication de la demande: **06.04.2016**
(21) Numéro de dépôt: 15187300.7
(22) Date de dépôt: 29.09.2015
(51) Int. Cl.: B01J 38/02, B01J 38/12, B01J 38/48, B01J 23/22, B01D 53/94, B01J 38/64, B01J 38/66, B01J 37/06

(54) **PROCÉDÉ ET INSTALLATION DE RÉGÉNÉRATION D'UN CATALYSEUR STRUCTURÉ DE DÉNITRIFICATION**

(30) Priorité: 01.10.2014 FR 1459363
(71) Demandeur: LAB SA, 69007 Lyon (FR)
(72) Inventeur: TABARIES, Frank, 83430 SAINT MANDRIER SUR MER (FR); LEONARD, Stéphan, 83000 TOULON (FR)
(74) Mandataire: Grand, Guillaume

(57) **Abrégé**

Dans ce procédé de régénération d'un catalyseur de dénitrification, sous forme structurée et à principe actif métallique, le catalyseur à régénérer (K) est placé dans une enceinte (100) sur laquelle est fermé un circuit d'air (1), puis tout en maintenant le catalyseur dans cette enceinte, les séquences suivantes sont successivement réalisées :
- une séquence de nettoyage à sec (S1), dans laquelle le catalyseur est débarrassé mécaniquement de poussières et/ou de sels déposés sur le catalyseur en faisant circuler dans le circuit de l'air qui, dans l'enceinte, nettoie à sec le catalyseur par soufflage ;
- une séquence de ré-imprégnation (S3), dans laquelle le catalyseur est mis en contact avec un aérosol d'une solution (10) contenant le ou les métaux du principe actif du catalyseur, cet aérosol étant porté par un flux d'air (F) circulant dans l'enceinte et repris dans le circuit (1) ; et
- une séquence de séchage et/ou calcination (S4), dans laquelle le catalyseur est porté, pendant au moins deux heures, à une température d'au moins 140°C par de l'air du circuit, qui circule chaud dans l'enceinte.

## Description

La présente invention concerne un procédé et une installation de régénération de catalyseurs structurés à principe actif métallique, utilisés pour la dénitrification de fumées contenant des oxydes d'azote.

Lors de l'incinération, par exemple, de déchets ménagers, de biomasses ou de boues de stations d'épuration, les fumées issues de la combustion contiennent une quantité appréciable d'éléments nocifs, comme le chlorure d'hydrogène (HCl) et le dioxyde de soufre (SO₂), ainsi que des poussières, des métaux lourds et des composés organiques, tels que des dioxines, furanes ou composés aromatiques coplanaires. Ces fumées contiennent également des oxydes d'azote. Avant de pouvoir être rejetées à l'atmosphère, les fumées résultant de la combustion doivent être épurées. Il est habituel, pour de raisons de technologies, d'effectuer séparément les opérations de dénitrification de celles d'élimination des autres polluants.

Plusieurs technologies sont disponibles pour effectuer la dénitrification. Parmi elles, la dénitrification catalytique, dite SCR (anagramme de l'expression anglaise « sélective catalytic réduction »), occupe une place de choix, tant pour ses performances en dénitrification, que pour sa capacité à aussi traiter les dioxines et les furanes. Dans cette technologie, les fumées à épurer passent à travers une unité contenant un réacteur catalytique ayant un principe actif typiquement métallique, tel que des oxydes métalliques, par exemple des oxydes de vanadium ou de tungstène, ce réacteur catalytique promouvant la réduction des oxydes d'azote par réaction avec de l'ammoniac ou avec un autre réactif.

Dans sa forme usuelle, il faut veiller à protéger le catalyseur contre un certain nombre de poisons et éviter la formation de sels, comme le bisulfate d'ammonium, qui encrassent les échangeurs et le catalyseur. Cette dénitrification SCR peut être placée en amont ou bien en aval des autres unités qui épurent les fumées des autres composants nocifs qu'elles contiennent initialement, comme les poussières et les oxydes de soufre. On peut choisir d'opérer la dénitrification à une température relativement élevée, par exemple entre 250 et 350°C, ou bien à une température relativement basse, par exemple entre 170 et 250°C. Une contrainte de ce procédé de dénitrification est que le réactif usuellement utilisé réagit avec les oxydes de soufre encore présents à ce niveau et peut déposer des sels comme le sulfite, le sulfate, le bisulfite ou le bisulfate d'ammonium, qui bloquent les pores du catalyseur. D'autres sels, par exemple des chlorures métalliques, peuvent également se déposer. Par ailleurs, les fumées peuvent aussi véhiculer des poisons, comme par exemple l'arsenic ou le phosphore, qui désactivent le catalyseur. Enfin, des composés organiques, issus de la combustion à l'origine des fumées, peuvent aussi se déposer et nuire au catalyseur.

On peut placer l'unité de dénitrification SCR en amont des autres unités assurant l'élimination des poussières et des gaz acides, comme des filtres et des laveurs, à un endroit où la température est encore élevée, ce qui permet d'économiser les réchauffeurs et échangeurs autrement nécessaires. En revanche, les fumées non traitées contiennent encore une quantité de poussières importante, ce qui oblige à minima à sélectionner un catalyseur à canal plus ouvert et interdit pratiquement l'utilisation d'un catalyseur en granulés. De plus, la teneur en oxydes de soufre, SO₂ et SO₃, encore importante, peut aggraver le risque de dépôt de sels sur les catalyseurs.

Pour cette raison, on choisit souvent de placer l'unité de dénitrification SCR en aval des laveurs et des filtres. Deux options s'offrent alors : travailler à une température plutôt élevée, par exemple entre 250 et 350°C, ou bien plutôt basse, par exemple entre 170 et 250°C. Si opérer à relativement haute température apporte une sécurité supplémentaire vis-à-vis de l'empoisonnement ou du dépôt de sels, il faut remonter la température des fumées, depuis celle où opèrent les laveurs précités, par exemple vers 65°C, ou bien les filtres précités, par exemple entre 120 et 200°C, jusqu'à la température de service de la dénitrification SCR. Une telle remontée en température oblige à installer des échangeurs récupérateurs de chaleur, qui sont coûteux et eux-mêmes sujets à encrassement par dépôt de sels. Opérer à basse température permet, au prix d'un volume supérieur de catalyseur, d'économiser les échangeurs récupérateurs et conduit à des investissements moindres, mais rend le catalyseur plus sensible aux poisons.

Dans tous les cas de figure, la perte d'activité du catalyseur, progressive et plus ou moins rapide, reste inéluctable. Il y a donc lieu de procéder à des régénérations régulières du catalyseur. Pour les catalyseurs sous forme structurée, par exemple les catalyseurs en monolithes, les régénérations sont souvent effectuées hors ligne et plusieurs techniques correspondantes sont employées. En pratique, cette régénération peut être effectuée dans des usines spécialisées, après démontage et transport des modules de catalyseur structuré de l'unité de dénitrification SCR. Cette régénération est mise en oeuvre en procédant notamment à un soufflage ou à un lavage du catalyseur, suivi de son séchage. US 6 484 733, US 5 308 810, US 6 241 826 et WO 2000/01483 décrivent en détail de tels procédés de régénération. Une régénération en ligne, par un procédé purement thermique, a également été proposée par EP-2 422 877. Dans tous les cas, il est souvent nécessaire de régénérer chimiquement le catalyseur, par ré-imprégnation avec une solution contenant le principe actif du catalyseur, par exemple le vanadium, afin de redonner suffisamment d'activité au catalyseur régénéré.

On peut aussi procéder à une régénération par chauffage in situ, c'est-à-dire en isolant un ou plusieurs modules de catalyseur au sein de l'unité de dénitrification SCR puis en élevant la température de ce ou ces modules. Mais ceci ne suffit souvent pas, sans ré-imprégnation avec la solution ad hoc précitée, à redonner assez d'activité au catalyseur.

En ce qui concerne les opérations de régénération chimique des catalyseurs structurés, on notera que l'utilisation de volumes importants d'une solution contenant des métaux, comme le vanadium ou le tungstène, à des valences d'oxydation élevées, n'est pas sans causer des problèmes de toxicité et de manipulation, ainsi que des problèmes de stockage et d'évacuation. De plus, le trempage ou la mise en contact du catalyseur avec beaucoup de liquide et de manière prolongée affaiblit le substrat du catalyseur et nuit à la pérennité mécanique du catalyseur ainsi traité.

De son côté, FR-A-2 731 164, qui peut être considéré comme l'état de la technique le plus proche de l'invention, propose un procédé et une installation de régénération d'un catalyseur structuré à principe actif à base de platine, rhodium ou palladium. Plutôt que d'appliquer, sur le catalyseur à régénérer, de la poussière activée de métaux par saupoudrage ou étalage au pinceau ou soufflage, une solution liquide de composés de métaux précieux est projetée dans le catalyseur sous forme d'un aérosol porté par de l'air. Cet aérosol peut être appliqué en circuit fermé sur une enceinte à l'intérieur de laquelle est placé le catalyseur à régénérer, moyennant la séparation des fractions gazeuse et liquide du flux d'aérosol en sortie de l'enceinte puis le renvoi dissocié de ces fractions en entrée de l'enceinte où elles sont remélangées, avec apport de solution fraîche et/ou d'air frais le cas échéant. Pour mener la régénération du catalyseur à son terme, il est nécessaire à la fois de basculer l'enceinte précitée sur un autre circuit faisant circuler un milieu réducteur, tel que H₂, à travers le catalyseur, puis de chauffer le catalyseur, ce qui implique des manipulations fastidieuses qui doivent être mises en oeuvre avec précaution pour garantir l'efficacité de la régénération. L'installation correspondante est donc onéreuse, ainsi que complexe à utiliser et à régler.

Le but de la présente invention est de proposer un procédé de régénération d'un catalyseur de dénitrification, qui, tout en étant efficace et facile à mettre en oeuvre, évite d'affaiblir mécaniquement le catalyseur traité.

A cet effet, l'invention a pour objet un procédé de régénération d'un catalyseur de dénitrification, sous forme structurée et à principe actif métallique, tel que défini à la revendication 1.

Une des idées à la base de l'invention est de chercher à éviter de mouiller de manière importante et prolongée le catalyseur structuré pendant sa régénération chimique par une solution liquide contenant le ou les métaux du principe actif du catalyseur. Pour ce faire, l'invention prévoit de mettre en suspension dans l'air la solution de régénération, les gouttes de solution correspondantes formant ainsi un aérosol mis en contact avec le catalyseur. L'invention prévoit que de l'air, circulant en circuit fermé sur une enceinte dans laquelle est placé le catalyseur à régénérer, assure successivement le nettoyage à sec du catalyseur par soufflage, le transport de l'aérosol à travers le catalyseur et la circulation d'air chaud pour sécher et/ou calciner le catalyseur. L'efficacité avec laquelle l'aérosol atteint et recharge en principe actif le catalyseur, en particulier à l'intérieur des canaux et des pores du catalyseur préalablement dépoussiéré et sec, est remarquable et peut avantageusement être améliorée par l'utilisation concomitante de vibrations et/ou par une préparation préalable du catalyseur en utilisant des vibrations et/ou un agent abrasif de sablage du catalyseur, cette préparation préalable du catalyseur pouvant optionnellement inclure un prétraitement thermique qui, par chauffage en milieu oxydant, détruit et/ou désorbe les composés organiques et autres poisons adsorbés sur le catalyseur à régénérer. En bouclant la circulation d'air dans l'enceinte lors de la mise en oeuvre successive de toutes les séquences du procédé, la régénération du catalyseur est à la fois performante, simple à réaliser et maîtrisée.

Des caractéristiques additionnelles avantageuses du procédé de régénération conforme à l'invention sont spécifiées aux revendications 2 à 10.

L'invention a également pour objet une installation de régénération d'un catalyseur de dénitrification sous forme structurée et à principe actif métallique, telle que définie à la revendication 11.

Cette installation permet de mettre en oeuvre le procédé de régénération tel que défini plus haut.

Des caractéristiques additionnelles avantageuses de l'installation de régénération conforme à l'invention sont spécifiées aux revendications 12 à 15.

L'invention sera mieux comprise à la lecture de la description qui va suivre, donnée uniquement à titre d'exemple et faite en se référant aux dessins sur lesquels :
- la figure 1 est un organigramme montrant des séquences d'un procédé de régénération conforme à l'invention ; et
- la figure 2 est un schéma d'un exemple d'une installation de mise en oeuvre du procédé de la figure 1.

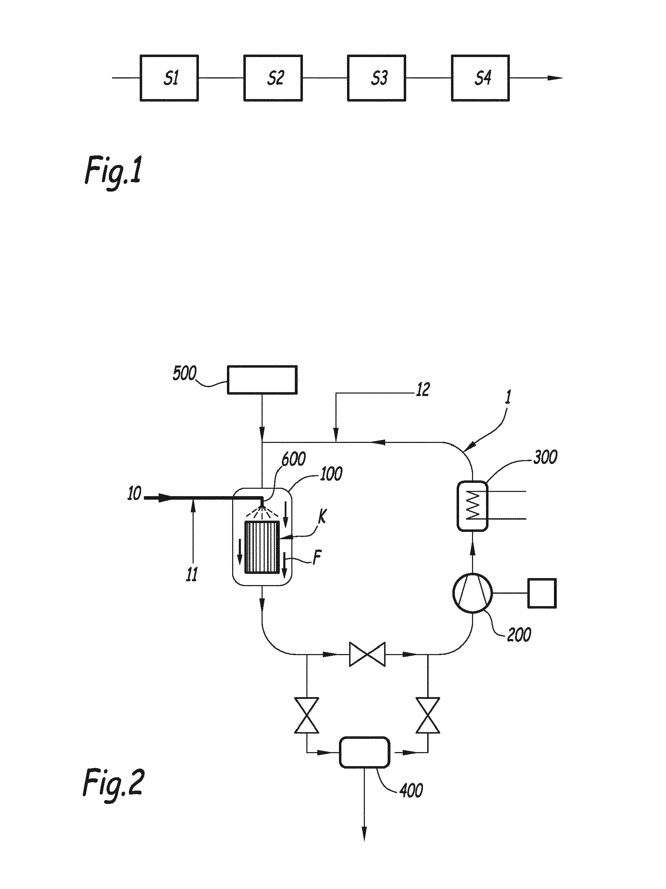

Sur la figure 1 sont représentées quatre séquences temporelles S1 à S4, auxquelles est successivement soumis un catalyseur à régénérer, en étant mises en oeuvre par une installation montrée à la figure 2 sur laquelle le catalyseur est référencé K.

En pratique, le catalyseur à régénérer K est sous forme structurée, telle qu'en monolithes, par exemple en canaux ou en nids d'abeille, une forme en plaques ou bien une forme associant des plaques entre lesquelles un mur de forme sinusoïdale est intercalé, et ce de manière non limitative. Cette forme structurée du catalyseur K exclut des catalyseurs pulvérulents ou en granulés.

Le catalyseur à régénérer K comprend un substrat, par exemple majoritairement de l'oxyde de titane, et un principe actif métallique, notamment un oxyde ou un mélange d'oxydes métalliques, par exemple un oxyde de vanadium, tel que V₂O₅, ou un oxyde de tungstène, tel que WO₃, de manière non limitative. Plutôt que d'être à base de vanadium ou de tungstène, le catalyseur peut, par exemple, être à base de fer et de manganèse. Dans tous les cas, ce catalyseur est, en tant que tel, connu de l'homme de l'art comme catalyseur de dénitrification SCR.

Les séquences S1 à S4 sont mises en oeuvre, comme détaillé ci-après, alors que le catalyseur à régénérer K a été préalablement sorti de l'unité de dénitrification SCR où il opère normalement pour dénitrifier des fumées, puis placé dans une enceinte 100 sur laquelle est fermé un circuit d'air 1.

Selon le procédé de l'invention, le catalyseur K est d'abord soumis à la séquence S1 dite de nettoyage à sec. Ce nettoyage à sec peut être assimilé à un dépoussiérage : le but de la séquence S1 est de débarrasser, par action mécanique, le catalyseur K de la plus grande partie des poussières et des sels non fortement adhérents, qui se sont déposés sur ce catalyseur et qui en bloquent les canaux et les pores.

Le nettoyage du catalyseur K lors de la séquence S1 est réalisé par soufflage d'air dans l'enceinte 100, établi et entretenu via le circuit 1. La circulation de l'air dans le circuit 1 et, de ce fait, dans l'enceinte 100 est assurée par un ventilateur 200 qui est d'une technologie connue. L'air circulant peut être chauffé ou bien à température ambiante, mais il est important que le catalyseur K reste sec : il est donc préférable de travailler à température contrôlée, choisie en particulier entre la température ambiante et 140°C, cette température contrôlée étant obtenue et maintenue par un dispositif 300 de chauffage de l'air dans le circuit 1. Ce dispositif de chauffage 300 est, par exemple, une batterie de chauffe électrique. La localisation du ventilateur 200 dans la boucle de circulation de l'air est sans réelle importance : de manière préférée, ce ventilateur 200 est placé juste en amont du dispositif de chauffage 300. En variante, on peut aussi utiliser des buses de soufflage, dont l'action complète avantageusement l'effet de l'air circulant, pour le nettoyage à sec du catalyseur.

Lors de la séquence de nettoyage à sec S1, l'air circule dans l'enceinte 100 et dans le circuit 1 en boucle fermée, en prévoyant que l'air ayant traversé le catalyseur K passe à travers un filtre 400. Ce filtre 400 est d'une technologique connue : il est par exemple constitué par un filtre à manche ou un filtre céramique, de manière non limitative. En pratique, le filtre 400 peut être isolé et bypassé par un jeu de vannes, de sorte que l'air du circuit 1 ne le traverse que pendant la séquence S1 du procédé, voire qu'en fin de séquence S1.

De manière optionnelle, au cours de la séquence de nettoyage à sec S1, un générateur de vibrations 500, agencé dans l'enceinte 100 ou bien connecté à celle-ci par des canalisations de transmission de vibrations, est utilisé pour créer des vibrations, sonores ou ultrasonores, dans l'enceinte, qui aident au nettoyage. Ce générateur de vibrations 500, qui est connu en soi, établit un système d'ondes stationnaires dans l'enceinte 100. Le générateur de vibrations 500 peut être balayé en fréquence, de façon à activer de manière différente certaines zones de l'enceinte 100 ou bien de façon à déplacer la localisation des ventres d'ondes générées.

Egalement de manière optionnelle, au cours de la séquence de nettoyage à sec S1, un agent abrasif 12 est introduit dans le circuit 1 et est mélangé à l'air y circulant. Cet agent abrasif, par exemple constitué de silice ou de sable très fin, réalise un sablage du catalyseur K, mettant ainsi à neuf la surface de ce dernier.

De manière optionnelle, le catalyseur issu de la séquence S1 est ensuite porté, lors de la séquence S2, en milieu oxydant tel que l'air, à une température suffisante pour désorber ou détruire par oxydation les composés organiques qui y sont adsorbés. Ces composés organiques s'accumulent au fur et à mesure du service du catalyseur et constituent une barrière, de par leur caractère hydrophobe, à la pénétration d'une solution de régénération chimique, jusque dans les pores du catalyseur. D'autres composés, comme certains chlorures minéraux, peuvent aussi être désorbés sous l'effet de la température lors de cette séquence de chauffage S2.

Lors de cette séquence de chauffage S2, le filtre 400 est normalement bypassé et la température de l'enceinte 100 est élevée jusqu'à porter le catalyseur K à une température comprise entre 300 et 550°C, cette température étant préférentiellement appliquée pendant au moins 30 minutes. Le ventilateur 200 et le dispositif de chauffage 300 servent à établir et entretenir cette température dans l'enceinte 100, par circulation d'air chauffé dans le circuit 1.

A la fin de cette séquence optionnelle S2, la température du catalyseur K est abaissée à au plus 80°C, de façon à éviter un choc thermique trop violent lors du début de l'étape subséquente S3. Pour ce faire, l'air circulant dans le circuit 1 est refroidi par des moyens non représentés, ou bien, plus simplement, on interrompt la chauffe de l'air par le dispositif de chauffage 300 et on laisse refroidir.

Selon une disposition optionnelle, qui est mise en oeuvre lors de la séquence de nettoyage à sec S1 et/ou lors de la séquence de chauffage S2, un agent à grand pouvoir absorbant, tel que de l'argile, de la bentonite ou de la diatomite, est introduit dans le circuit d'air 1, afin de capter et fixer ce que le catalyseur libère.

Selon l'invention, le catalyseur, issu de la séquence de chauffage S2 ou issu directement de la séquence de nettoyage à sec S1, est ensuite, dans la séquence S3, mis en contact avec une solution liquide de régénération 10, contenant des sels des métaux du principe actif du catalyseur, par exemple un vanadate ou un métavanadate pour le cas du catalyseur au vanadium : cette séquence de ré-imprégnation S3 permet de recharger le catalyseur K en principe actif. La séquence S3 constitue une étape essentielle du procédé selon l'invention, dans le sens où, pour éviter d'exposer le catalyseur K à des quantités de liquide trop importantes, la solution de régénération 10 est mise en suspension dans l'air, sous forme de fines gouttes constituant un aérosol. Ces fines gouttes pénètrent dans les canaux et les pores du catalyseur K et s'y déposent, en formant un film humide qui sèche facilement. On comprend qu'il est important que la taille des gouttes de l'aérosol soit petite : de préférence, ces gouttes présentent un diamètre de Sauter d32 qui n'excède pas 150 µm.

Au cours de la séquence de ré-imprégnation S3, qui, en pratique, dure au moins une heure et au plus six heures, l'aérosol est porté par un flux d'air F circulant dans l'enceinte 100. Ce flux d'air F provient du circuit 1 et est repris dans le circuit 1, pour recirculation vers l'enceinte 100, par le ventilateur 200 qui maintient ainsi une circulation d'air limitée, de façon à aider à la diffusion, au dépôt et à la pénétration de l'aérosol vis-à-vis du catalyseur K. De plus, durant la séquence S3, le catalyseur n'est plus chauffé et le filtre 400 est normalement bypassé.

L'aérosol utilisé au cours de la séquence de ré-imprégnation S3 est obtenu, à partir de la solution 10, par un dispositif ad hoc 600, qui est connu en lui-même et qui peut être qualifié de dispositif d'atomisation ou de nébulisation. Ce dispositif est par exemple un pulvérisateur à air assisté ou bien un pulvérisateur ultrasonique. Dans le cas où le dispositif 600 est un pulvérisateur à air assisté, un flux d'air comprimé 11 est appliqué à l'introduction de la solution 10 et une purge gazeuse, non représentée sur la figure 2, est nécessaire pour le circuit 1. Dans tous les cas, le dispositif 600 est situé dans l'enceinte 100 ou bien dans les canalisations du circuit 1, immédiatement en amont de l'enceinte.

L'effet de la séquence de ré-imprégnation S3 est ainsi de mettre en contact les canaux et les pores du catalyseur K avec la solution 10 qui s'y dépose sous forme de gouttes de l'aérosol précité, sans pour autant tremper le catalyseur. Le flux d'air en aval du catalyseur K, c'est-à-dire à la sortie de l'enceinte 100, ne contient donc pas d'eau liquide autrement que sous forme de gouttes résiduelles de l'aérosol, de sorte que la qualité q de ce flux en sortie de l'enceinte 100, définie comme le rapport de son débit massique liquide sur son débit massique total, est de préférence inférieure à 0,07.

A titre optionnel, la solution 10 contient avantageusement, en plus des sels métalliques, un surfactant ou un tensio-actif, qui, par abaissement de la tension de surface entre l'air et le liquide de la solution 10, diminue la taille des gouttes de l'aérosol généré par le dispositif 600 : cela améliore la dispersion, la diffusion et donc l'efficacité de ces gouttes vis-à-vis de la régénération du catalyseur K.

Selon l'invention, le catalyseur issu de la séquence S3 est enfin soumis à la séquence S4, dite de séchage et/ou calcination, dans laquelle la température du catalyseur K est élevée progressivement à une température comprise entre 140°C et 550°C. Cette séquence S4 poursuit le double effet de sécher le catalyseur et de transformer en oxydes actifs les sels métalliques du principe actif, par exemple les sels de vanadium, déposés sur le catalyseur lors de la séquence S3. En pratique, la séquence S4 peut comporter des étapes portant, par rampes et paliers, le catalyseur à diverses températures, toujours inférieure à 550°C. L'essentiel est qu'à la fin de cette séquence S4, le catalyseur soit parfaitement sec et qu'il présente, à sa surface et dans ses pores, des oxydes métalliques nouvellement apportés, redonnant ainsi au catalyseur son activité.

En pratique, la séquence de séchage et/ou calcination S4 est mise en oeuvre en faisant circuler dans l'enceinte 100 de l'air chaud, en utilisant le ventilateur 200 et le dispositif de chauffage 300.

A la fin de la séquence S4, le catalyseur est prêt à être réemployé au sein d'une unité de dénitrification SCR. Pour ce faire, il est alors sorti de l'enceinte 100 et installé dans l'unité de dénitrification SCR, en étant laissé à l'air libre entretemps le cas échéant.

En tenant compte des explications qui précèdent, on comprend que les débits et les vitesses de circulation de l'air dans les canaux du catalyseur K ne sont pas les mêmes pour les séquences S1 à S4, ni même nécessairement constantes dans chacune de ces séquences, de sorte que le ventilateur 200 est préférentiellement à vitesse variable. En effet, il est notamment souhaitable que la vitesse de l'air au travers du catalyseur, notamment dans ses canaux, soit plus importante lors de la séquence de nettoyage à sec S1 que lors de la séquence de ré-imprégnation S3 où cette vitesse doit laisser le temps à la diffusion, notamment radiale, de faire son oeuvre pour permettre aux gouttes de l'aérosol d'atteindre la paroi des canaux du catalyseur. A titre d'exemple, lors de la séquence S1, une vitesse dans le catalyseur supérieure à 1 m/s est souhaitable tandis que, lors de la séquence S3, une vitesse inférieure à 1 m/s est souhaitable.

Par ailleurs, sur la figure 2, on notera que ne sont pas tous représentés les jeux de vannes et de registres, nécessaires pour isoler ou bypasser le filtre 400 et permettre des appoints d'air ou des purges vis-à-vis du circuit 1. Similairement, l'évacuation de ce qui est collecté par le filtre 400 n'est pas détaillée. De plus, d'autres équipements connus, tels que, non limitativement, des échangeurs de chaleur, peuvent présents sur le circuit 1.

### Exemple détaillé :

1 m³ environ d'un catalyseur, à substrat en oxyde de titane et à principe actif V₂O₅, ayant une forme structurée en canaux sous forme de monolithe et formant un bloc de 1,25 mètre de hauteur et à base carrée de 900 mm de côté, est placé dans l'enceinte 100 de façon que l'air y circulant, recirculé par le circuit 1, traverse les canaux du catalyseur.

Lors de la séquence S1, le catalyseur est nettoyé à sec par soufflage, en faisant circuler un flux d'air à température ambiante de 4000 Nm³/h, ce qui conduit à une vitesse de 2,2 m/s vis-à-vis du catalyseur ayant 85 % d'ouverture. Le générateur de vibrations 500 est utilisé, avec une fréquence variable entre 60 et 350 Hz. Dans une première étape, qui dure 20 minutes, le filtre 400 est bypassé. Puis, pendant une seconde étape, qui dure 40 minutes, la température est progressivement montée à 120°C, le débit d'air est diminué à 700 Nm³/h et l'air circule dans le filtre 400 : cette diminution de débit à simplement pour but de pouvoir utiliser, pour le filtre 400, un filtre de dimensions restreintes puisque, bien que l'écoulement de l'air à travers le catalyseur doit présenter une vitesse minimum pour dépoussiérer le catalyseur, travailler avec le filtre 400 sur la totalité du flux initial serait peu économique.

Dans la séquence S2, la température est portée à 450°C, par une rampe qui porte la température de l'air du circuit 1 de sa valeur en fin de la séquence S1 à la valeur de 450°C. Puis, cette température de 450°C est maintenue par un palier. La durée totale de la séquence S2 est de quatre heures. Un débit de 700 Nm³/h est maintenu par le ventilateur 200. La vitesse dans les canaux du catalyseur est donc de 0,9 m/s. A la fin de la séquence S2, la température est réduite à 80°C, par circulation d'air plus frais dans le circuit 1.

La séquence S3 est ensuite réalisée, en pulvérisant, à l'aide d'un pulvérisateur à air assisté, 100 l/h d'une solution de vanadate d'ammonium ayant une concentration de 5 g/l exprimée en vanadium. Durant cette séquence S3, le débit du flux d'air F est de 700 Nm³/h. Pendant cette séquence S3, la température de l'air circulant dans le circuit 1 est maintenue à 80°C. Une certaine évaporation des gouttes de l'aérosol a lieu, ce qui, combiné au dépôt des gouttes de l'aérosol dans les canaux du catalyseur, conduit à ce que la qualité q, telle que définie plus haut, du flux d'air en sortie de l'enceinte 100 est inférieure à 0,07. Comme de l'air est introduit en permanence par le pulvérisateur à air assisté, une purge du circuit 1 est effectuée régulièrement, à travers un filtre auxiliaire, non représenté sur la figure 2.

Enfin, dans la séquence de séchage et/ou calcination S4, qui dure quatre heures, le catalyseur est porté à une température de 250°C, avec un palier à 140°C.

## Revendications

1. Procédé de régénération d'un catalyseur de dénitrification, sous forme structurée et à principe actif métallique,
dans lequel le catalyseur à régénérer (K) est placé dans une enceinte (100) sur laquelle est fermé un circuit d'air (1), puis tout en maintenant le catalyseur dans cette enceinte, les séquences suivantes sont successivement réalisées :
- une séquence de nettoyage à sec (S1), dans laquelle le catalyseur (K) est débarrassé mécaniquement de poussières et/ou de sels déposés sur le catalyseur en faisant circuler dans le circuit (1) de l'air qui, dans l'enceinte (100), nettoie à sec le catalyseur par soufflage ;
- une séquence de ré-imprégnation (S3), dans laquelle le catalyseur (K) est mis en contact avec un aérosol d'une solution (10) contenant le ou les métaux du principe actif du catalyseur, cet aérosol étant porté par un flux d'air (F) circulant dans l'enceinte (100) et repris dans le circuit (1) ; et
- une séquence de séchage et/ou calcination (S4), dans laquelle le catalyseur (K) est porté, pendant au moins deux heures, à une température d'au moins 140°C par de l'air du circuit (1), qui circule chaud dans l'enceinte (100).

2. Procédé suivant la revendication 1, dans lequel, entre la séquence de nettoyage à sec (S1) et la séquence de ré-imprégnation (S3), est mise en oeuvre une séquence de chauffage (S2) dans laquelle de l'air du circuit (1), qui circule chaud dans l'enceinte (100), porte le catalyseur (K) à une température comprise entre 300 et 550°C de manière à détruire par oxydation et/ou désorber des composés adsorbés sur le catalyseur.

3. Procédé suivant l'une des revendications 1 ou 2, dans lequel on fait circuler l'air du circuit (1) dans l'enceinte (100) avec une vitesse plus importante lors de la séquence de nettoyage à sec (S1) que lors de la séquence de ré-imprégnation (S3).

4. Procédé suivant l'une quelconque des revendications précédentes, dans lequel, au cours de la séquence de nettoyage à sec (S1), on soumet le catalyseur (K) à un système d'ondes stationnaires.

5. Procédé suivant l'une quelconque des revendications précédentes, dans lequel, au cours de la séquence de nettoyage à sec (S1), on envoie sur le catalyseur (K) un agent abrasif (12), introduit dans le circuit (1) et mélangé à l'air y circulant, de manière à réaliser un sablage de la surface du catalyseur.

6. Procédé suivant l'une quelconque des revendications précédentes, dans lequel, au cours de la séquence de ré-imprégnation (S3), l'aérosol est constitué de gouttes de la solution (10), présentant un diamètre de Sauter d32 d'au plus 150 µm.

7. Procédé suivant l'une quelconque des revendications précédentes, dans lequel, au cours de la séquence de ré-imprégnation (S3), on soumet le catalyseur (K) à un système d'ondes stationnaires.

8. Procédé suivant l'une quelconque des revendications précédentes, dans lequel, au cours de la séquence de ré-imprégnation (S3), le flux d'air en sortie de l'enceinte (100) présente une qualité q, définie comme le rapport du débit massique liquide de ce flux sur son débit massique total, qui est inférieure à 0,07.

9. Procédé suivant l'une quelconque des revendications précédentes, dans lequel, le catalyseur à régénérer (K) est à base de vanadium, et dans lequel la solution (10) utilisée lors de la séquence de ré-imprégnation (S3) contient un sel de vanadium.

10. Procédé suivant l'une quelconque des revendications précédentes, dans lequel la séquence de ré-imprégnation (S3) est mise en oeuvre pendant au moins une heure et au plus six heures.

11. Installation de régénération d'un catalyseur de dénitrification, sous forme structurée et à principe actif métallique, cette installation comportant à la fois :
- une enceinte (100) dans laquelle est placé le catalyseur à régénérer (K), et
- des moyens (600) de production dans l'enceinte (100) d'un aérosol d'une solution (10) contenant le ou les métaux du principe actif du catalyseur,
**caractérisée en ce que** l'installation comporte en outre :
- un circuit d'air (1) qui est fermé sur l'enceinte (100),
- des moyens (300) de chauffage de l'air dans le circuit (1),
- des moyens (200) de mise en circulation de l'air dans le circuit (1), adaptés pour, successivement dans l'enceinte (100), réaliser un soufflage d'air nettoyant à sec le catalyseur, produire un flux d'air (F) portant l'aérosol et faire circuler de l'air chauffé par les moyens de chauffage (300), et
- un filtre (400) qui est raccordé à l'enceinte (100) par le circuit (1).

12. Installation suivant la revendication 11, dans laquelle les moyens de production de l'aérosol (600) comprennent un pulvérisateur à air assisté.

13. Installation suivant l'une des revendications 11 ou 12, dans laquelle les moyens de mise en circulation de l'air comprennent un ventilateur (200) à vitesse variable.

14. Installation suivant l'une quelconque des revendications 11 à 13, dans laquelle l'installation comporte en outre un générateur de vibrations (500) adapté pour créer un système d'ondes stationnaires dans l'enceinte (100).

15. Installation suivant l'une quelconque des revendications 11 à 14, dans laquelle l'installation comporte en outre des moyens d'introduction d'un agent abrasif (12) dans l'air circulant dans le circuit (1).
